# EUROPEAN PATENT APPLICATION

(11) **EP 2 865 439 A1**
(43) Date of publication of application: **29.04.2015**
(21) Application number: 13190263.7
(22) Date of filing: 25.10.2013
(51) Int. Cl.: B01D 53/26, F26B 21/08

(54) **A method for drying, a drying element, a drying unit and a computer program product**

(71) Applicant: Rhino Research Europe B.V., 7122 JH Aalten (NL)
(72) Inventor: van Asbrouck, Johan Gaston Marie, 66000 Phichit (TH)
(74) Representative: Jansen, Cornelis Marinus

(57) **Abstract**

The invention relates to a method for drying humid air. The method comprises a step of providing a drying unit, comprising a multiple number of drying elements (1), each of the drying elements (1) comprising a humid air inflow opening (2), a dry air outflow opening (3) and a flow channel (4) therebetween including a drying chamber (5) containing during operation zeolite particles (6). Each drying element (1) further comprises a cooling medium inflow opening (7), a cooling medium outflow opening (8) and a cooling channel (9) therebetween for cooling said flow channel (4). Further, the method comprises the step of operating a first, a second and a third drying element (1) each cyclically in a drying mode, a cooling mode and a regenerating mode, wherein the modes of the consecutive drying elements (1) are cyclically shifted.

## Description

### FIELD OF THE INVENTION

The invention relates to a method for drying, e.g. for drying agricultural products such as seeds.

### BACKGROUND OF THE INVENTION

Drying seeds is a crucial part in most seed processes. The quality and the longevity, very important factors for profitability for each seed business, are enormously influenced by drying.

Especially in areas with high ambient temperatures and/or high air moisture contents, such as in Asia, the non-trivial issue of drying and storing seeds is even a higher challenge.

Investment costs for adequate drying and storage systems are high. Further, the exploitation of such drying and storage systems suffer from irregular and unpredictable performance. Energy costs are soaring and are adding another challenging dimension to drying and storing seeds. In addition, adequate resources and infrastructure are often not available in those environments where seed drying and storage facilities are definitely needed.

Generally, the application of beads for drying seeds is a promising technology due to their drying performance and its nearly unending intrinsic regeneration possibilities. However, it appears in practice that regeneration of beads is rather cumbersome and labor intensive. Then, the drying system is not in operation during an uncertain period of time.

### SUMMARY OF THE INVENTION

It is an object of the present invention to provide an improved method for drying. Thereto, the method according to the invention comprises the step of providing a drying unit, comprising a multiple number of drying elements, each of the drying elements comprising a humid air inflow opening, a dry air outflow opening and a flow channel including a drying chamber containing during operation zeolite particles and extending between the inflow and outflow opening, each drying element further comprising a cooling medium inflow opening, a cooling medium outflow opening and a cooling channel extending between said cooling medium inflow and outflow opening for cooling the flow channel, and the step of operating a first, a second and a third drying element each cyclically in a drying mode, a cooling mode and a regenerating mode, wherein the modes of the consecutive drying elements are cyclically shifted.

By cyclically operating three drying elements in a drying mode, a cooling mode and a regenerating mode, in a shifted manner, the drying unit is advantageously always applicable for drying since at least one drying element is available for a drying operation. Further, the drying unit can be continuously in operation in a drying mode so that a constant drying performance can be achieved.

The invention also relates to a drying element and a drying unit.

Further, the invention relates to a computer program product. A computer program product may comprise a set of computer executable instructions stored on a data carrier, such as a flash memory, a CD or a DVD. The set of computer executable instructions, which allow a programmable computer to carry out the method as defined above, may also be available for downloading from a remote server, for example via the Internet.

Further advantageous embodiments according to the invention are described in the following claims.

### DESCRIPTION OF THE DRAWINGS

By way of example only, embodiments of the present invention will now be described with reference to the accompanying figures, in which
Figure 1 shows a schematic cross sectional view of a drying element according to the invention;
Figure 2 shows a schematic cross sectional view of a drying unit according to the invention;
Figure 3 shows a schematic view of a first embodiment of an integrated drying system including the drying unit of Fig. 2;
Figure 4 shows a schematic detailed partial view of a second embodiment of an integrated drying system including the drying unit of Fig. 2;
Figure 5 shows a schematic view of a third embodiment of an integrated drying system including the drying unit of Fig. 2; and
Figure 6 shows a flow chart of steps of a method for drying seeds according to the invention.

It is noted that the figures show merely preferred embodiments according to the invention. In the figures, the same reference numbers refer to equal or corresponding parts.

### DETAILED DESCRIPTION OF THE INVENTION

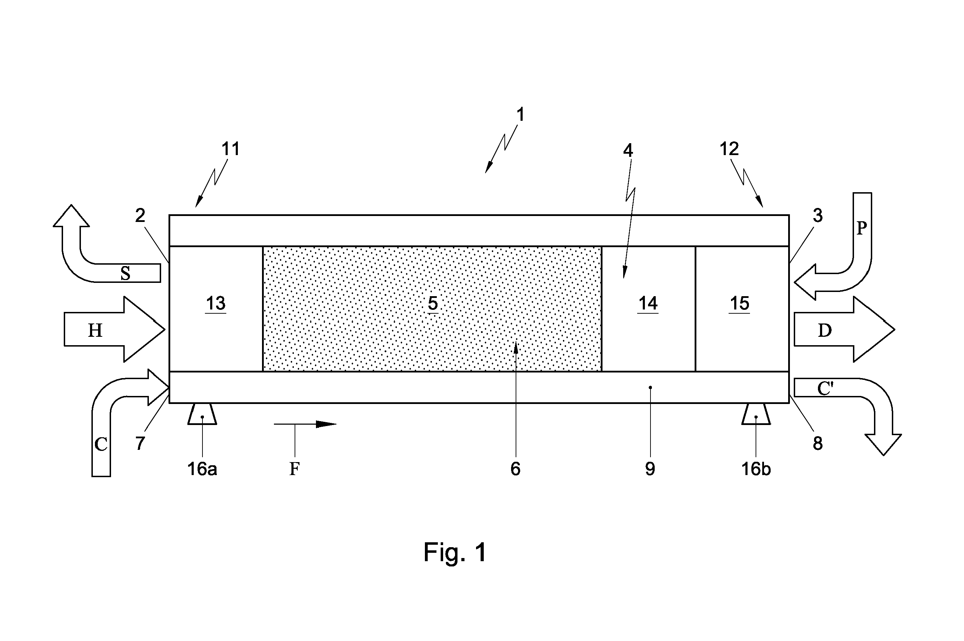

Figure 1 shows a schematic cross sectional view of a drying element 1 according to the invention. The drying element 1 is arranged for drying humid air, e.g. for the purpose of drying air that is flown through agricultural products such as seeds.

The drying element 1 has a humid air inflow opening 2, a dry air outflow opening 3, and a flow channel 4 through which humid air is flown. The channel extends between the inflow and the outflow opening 2, 3 and further includes a drying chamber 5 containing zeolite particles 6, also called "beads", during operation of the drying element 1. In addition, the drying element 1 is provided with a cooling medium inflow opening 7, a cooling medium outflow opening 8 and a cooling channel 9 extending between said cooling medium inflow and outflow opening 7, 8 for cooling the flow channel 4. The cooling medium outflow opening 8 is connectable to the dry air outflow opening of a further drying element.

The drying element 1 is operable in different modes, including a drying mode, a cooling mode and a regenerating mode.

When the drying element 1 is operated in a drying mode, humid air H flows via the humid air inflow opening 2 into the flow channel 4, through the drying chamber 5 containing zeolite particles 6, towards the dry air outflow opening 3 departing the flow channel 4 as dry air D. When traversing the drying chamber 5 the humid air H is dried by interaction with the zeolite particles 6.

When the drying element 1 is operated in a cooling mode, a cooling medium C, e.g. air, flows via the cooling medium inflow opening 7 into the cooling channel 9 flowing towards the cooling medium outflow opening 8. When flowing through the cooling channel 9, the temperature of the cooling medium C generally increases and the temperature inside the flow channel 4 generally decreases, thereby cooling the zeolite particles 6. When departing the cooling channel 9 the cooling medium C' has generally been heated.

Further, when the drying element 1 is operated in a regenerating mode, a pre-heated dry medium P flows into the flow channel 4 traversing the drying chamber 5 with the zeolite particles 6 and leaving the flow channel 4 as a saturated medium S. Preferably, the pre-heated dry medium is air. However, in principle, also other media can be used for regenerating the zeolite particles 6, e.g. nitrogen. When passing the drying chamber 5 the pre-heated air is moistened by moisture exuded by the zeolite particles. In this process the zeolite particles 6 are regenerated. Preferably, the temperature of the saturated medium S is measured when flowing from the channel 4 outwardly, thereby monitoring the regeneration phase of the zeolite particles.

The pre-heated dry medium P in a regenerating drying element 1 includes a heated cooling medium departing from a cooling channel of another drying element that is operated in a cooling mode. Then, the heat of the heated cooling medium of the second drying element is efficiently used for regenerating the zeolite particles in the present drying element 1. Thereto, during operation of the drying element 1, the cooling medium outflow opening 8 of a second drying element is connected to the dry air outflow opening 7 of the present drying element, so that the heated cooling medium flows from a drying element that is being cooled towards and into the flowing channel of another drying element that is being regenerated.

In the shown embodiment, the humid air inflow opening 2 and the cooling medium inflow opening 7 are located at a same end of the flow channel 4, a first end 11 of the drying element 1. Similarly, the dry air outflow opening 3 and the cooling medium outflow opening 8 are located at a same end of the flow channel 4, a second end 12 of the drying element 1. Then, the humid air H and the cooling medium C flow in a similar flow direction F, from the left to the right in Fig. 1. However, in principle, the openings 2, 3 of the flow channel 4 or the openings of the cooling channel 9 can be interchanged so that the humid air H and the cooling medium C flow in opposite directions. Further, in the shown embodiment, the pre-heated dry medium H flows in a direction opposite to the flow direction F of the humid air H. Alternatively, also the pre-heated dry medium H flows in the flow direction F of the humid air H. However, in a preferred embodiment, the flow direction of the pre-heated dry medium H and the flow direction of the cooling medium are mutually opposite, so that the length of a connecting structure connecting the cooling medium outflow opening 8 to the dry air outflow opening 7 of the present drying element can be minimized, saving pipe material and energy losses.

The drying element 1 shown in Fig. 1 further includes a first expansion chamber 13, and a second expansion chamber 14, on opposite sides of the drying chamber 5, upstream and downstream to the drying chamber 5. In principle, at least the first or the second expansion chamber 13, 14 can be left out. In addition, the drying element 1 includes a heating chamber 15, at the upstream side of the flow channel 4, in view of the pre-heated dry medium P flow, in the shown embodiment adjacent to the cooling medium outflow opening 8 and the dry air outflow opening 3. When the drying element 1 is arranged such that the pre-heated dry medium P flows in the opposite direction, i.e. in the same direction as the flow direction F, the heating chamber is located near the humid air inflow opening 2. The heating chamber is provided with a heating element for further heating the pre-heated drying medium P, thereby enhancing the regenerating process of the zeolite particles. In another embodiment, the drying element 1 does not have a heating chamber, e.g. when it appears that the temperature of the pre-heated dry medium P is high enough to facilitate the regeneration of the zeolite particles in a pre-determined time window. Preferably, the temperature of the air flown through the drying chamber 5 for regenerating the zeolite particles is within a range of circa 250 °C and circa 550 °C.

The drying element 1 shown in Fig. 1 has an elongate structure with a first end 11 and a second end 12. The drying element 1 is cylindrical. However, also other geometries are applicable, such as a plate shaped elongate structure with lateral wall structures. By providing an elongate structure, drying elements can easily be stacked on each other, thereby efficiently exploiting an available volume for drying air. Alternatively, the drying element can be implemented as a non-elongate structure, e.g. as a ball, saving material for manufacturing the drying element. Referring to the shown cylindrical configuration of the drying element, the cooling channel 9 may completely or partially surround the flow channel 4.

Further, the drying element 1 shown in Fig. 1 includes a weighing sensor 16a, b for weighing the weight of the drying element 1 to enable monitoring a saturation degree of the zeolite particles 6.

The term "zeolite" refers to a family of micro-porous hydrated aluminosilicate minerals. More than 150 zeolite types have been synthesized and 48 naturally occurring zeolites are known. Zeolites have an "open" structure that can accommodate a wide variety of cations, such as Na+, K+, Ca2+, Mg2+ and others. These positive ions are rather loosely held and can readily be exchanged for others in a contact solution. Some of the more common mineral zeolites are: Amicite, Analcime, Barrerite, Bellbergite, Bikitaite, Boggsite, Brewsterite, Chabazite, Clinoptilolite, Cowlesite, Dachiardite, Edingtonite, Epistilbite, Erionite, Faujasite, Ferrierite, Garronite, Gismondine, Gmelinite, Gobbinsite, Gonnardite, Goosecreekite, Harmotome, Herschelite, Heulandite, Laumontite, Levyne, Maricopaite, Mazzite, Merlinoite, Mesolite, Montesommaite, Mordenite, Natrolite, Offretite, Paranatrolite, Paulingite, Pentasil, Perlialite, Phillipsite, Pollucite, Scolecite, Sodium Dachiardite, Stellerite, Stilbite, Tetranatrolite, Thomsonite, Tschernichite, Wairakite, Wellsite, Willhendersonite and Yugawaralite, all of which are equally suitable for use in the present invention. An example mineral formula is: Na₂Al₂Si₃O₁₀-2H₂O, the formula for natrolite. Naturally occurring zeolites are rarely pure and are contaminated to varying degrees by other minerals, metals, quartz or other zeolites. For this reason, naturally occurring zeolites are less preferred in many applications where uniformity and purity are essential, yet such impure zeolites are very suitable for the present application.

The term zeolite includes reference to zeolite granules, zeolite beads and zeolite particles. Example of commercially available zeolites are; Linde Type A (LTA), Linde Types X and Y (Al-rich and Si-rich FAU), Silicalite-1 and ZSM-5 (MFI), and Linde Type B (zeolite P) (GIS). Other commercially available synthetic zeolites include Beta (BEA), Linde Type F (EDI), Linde Type L (LTL), Linde Type W (MER), SSZ-32 (MTT), BRZ® (clinoptilolite). All are aluminosilicates. Further, Linde type A zeolite (NaA, KA, CaA), also referred to by the three-letter code LTA (Linde Type A) zeolites, or the 3A, 4A and/or 5A type can be used. The size of the zeolite particles as used herein is not particularly limited in aspects of the present invention.

In all cases zeolites can take up water from moisture or water vapour in a gas. Zeolites can hold up to circa 55% or more of their weight in water. By choosing the pore size of the zeolite such that the pores are e.g. about 4 ångström, the zeolite is merely capable of absorbing water (H₂O), no other substances or at least hardly no other substances, thereby rendering the zeolite particles extremely apt and efficient for the purpose of absorbing water.

In the drying chamber 5 of the drying element 1, the zeolite particles 6 are preferably contained in a container or cassette to enable easy handling, e.g. when inspecting the condition of the particles.

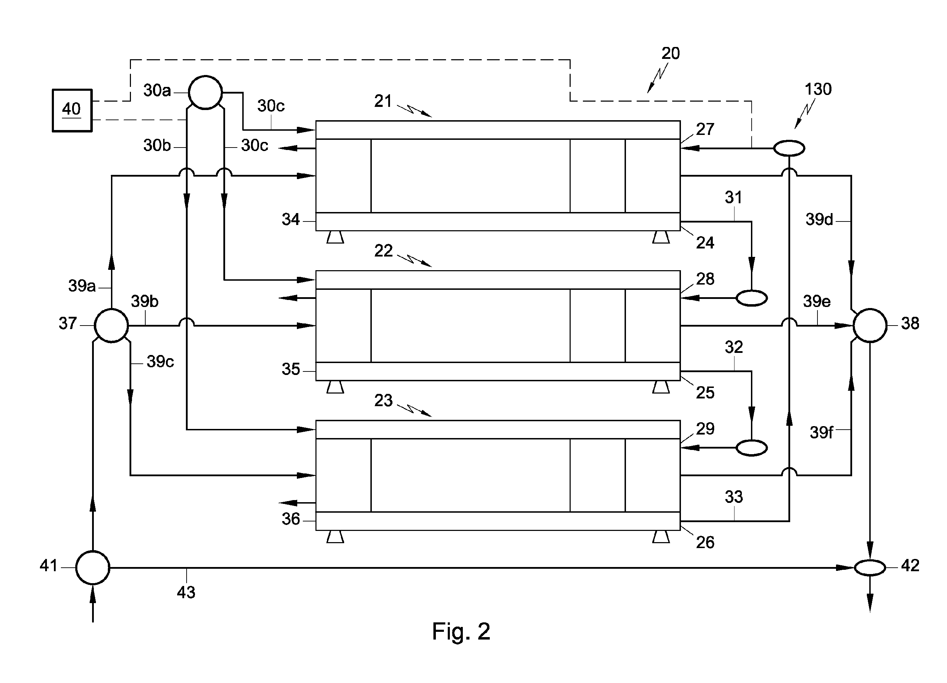

Figure 2 shows a schematic cross sectional view of a drying unit 20 according to the invention. The drying unit 20, also called basic unit, includes a multiple number of drying elements 1 described above, in the shown embodiment three drying elements 21, 22, 23. The drying elements are arranged in parallel and stacked on each other. Preferably, the drying elements are placed in a horizontal position, i.e. the orientation of their flow channel 4 is substantially horizontal to optimize the use the weighing sensors 16a,b. Each of the first, second and third drying element 21, 22, 23 is cyclically operable in a drying mode, a cooling mode and a regenerating mode. Further, the modes of the consecutive drying elements 21, 22, 23 are cyclically shifted. Thus, during operation, a first drying element is in a drying mode, a second drying element is in a cooling mode and a third drying element is in a regenerating mode. When the first drying element stops drying and starts operating in the cooling mode, also the second and the third drying element undergo a transition. The second drying element then starts operating in the regenerating mode while the third drying element then starts operating in the drying mode.

Generally, the cyclically operable drying elements undergo a shift to a next mode at coinciding time instants, i.e. within seconds. However, the exact mode shift instant may vary mutually, e.g. when the regeneration process in a first drying element has already completed before zeolite particles in a second drying element are fully saturated. Then, the first drying element may already move up to the drying mode to be completely ready for drying operation.

In accordance with the operation schedule of the drying elements 21-23, a cooling medium conduit structure 130 is provided interconnecting cooling medium outflow openings to dry air outflow openings of respective drying elements. The cooling medium conduit structure 130 includes a first conduit 31 interconnecting the cooling medium outflow opening 24 of the first drying element 21 to the dry air outflow opening 28 of the second drying element 22. Similarly, the cooling medium conduit structure 130 includes a second conduit 32 interconnecting the cooling medium outflow opening 25 of the second drying element 22 to the dry air outflow opening 29 of the third drying element 23, and a third conduit 33 interconnecting the cooling medium outflow opening 26 of the third drying element 23 to the dry air outflow opening 27 of the first drying element 21.

The cooling medium conduit structure 130 further includes valves enabling a fluid flow from a cooling medium outflow opening 24-26 of a specific drying element towards the dry air outflow opening 27-29 of the cyclically next drying element when the specific drying element is operated in the cooling mode and the cyclically next drying element is operated in the regenerating mode.

The cooling medium conduit structure 130 also includes a conduit network 30a-d provided with valves and connected to the cooling medium inflow openings 34-36 of the drying elements 21-23.

The drying unit 20 further includes a humid air inflow port 37, a dry air outflow port 38 and an intermediate conduit structure 39a-f with valves. The valves dynamically interconnect the humid air inflow port 38 to the humid air inflow opening of the first, second and third drying element 21-23 and dynamically interconnect the dry air outflow opening of the first, second and third drying element 21-23 to the dry air outflow port 38, such that the inflow and outflow ports are connected to the inflow and outflow opening of the drying element that is actually operated in a drying mode.

Further, the drying unit includes a control unit 40 controlling the valves in the cooling medium conduit structure 130 so that drying elements can be cooled when operated in a cooling mode, and a drying element operated in a regenerating mode can be provided with a flow of pre-heated dry medium P. The control unit 40 also controls valves in the intermediate conduit structure 39 so that humid air H to be dried is flown towards a drying element 21-23 that is operated in a drying mode. The control unit 40 thus controls the inflow of the humid air H and the outflow dry air D. The valves can accordingly be driven automatically or semi-automatically. It is noted that, alternatively, the inflow of the humid air H and/or the outflow of dried air D can be controlled manually. Thus, the control unit 40 can also be arranged to control either the intermediate conduit structure 39 or the cooling medium conduit structure 130. Further, the drying unit 20 can be implemented without a control unit providing a completely manually controlled unit.

For the purpose of specific control, the drying unit 20 shown in Fig. 2 also includes a first and second additional valve port 41, 42 allowing air to flow from an external location to the humid air inflow port 37 or directly via a by-pass route 43 to the second additional valve port receiving dried air from the dry air outflow port 38.

The configuration of three drying elements 21-23 forms a basic drying component that is able to perform a continuous, constant drying function since, in principle, always one drying element is operative in the drying mode. A drying unit 20 may contain a single or a multiple number of such basic drying components, viz. one component, two components, three components etc, i.e. three, six, nine, etc drying elements operating within a basic independent drying component.

By re-using the heat of the cooling medium, the unit is efficient from an energetic point of view. Further, by manually or automatically direction the heated cooling medium towards the channel with zeolite particles to be regenerated, the entire process of regenerating zeolite is made much less labour intensive, at least for the reason that the zeolite particle may remain in the drying chamber. In advantageous embodiments, even the entire drying element may remain in place.

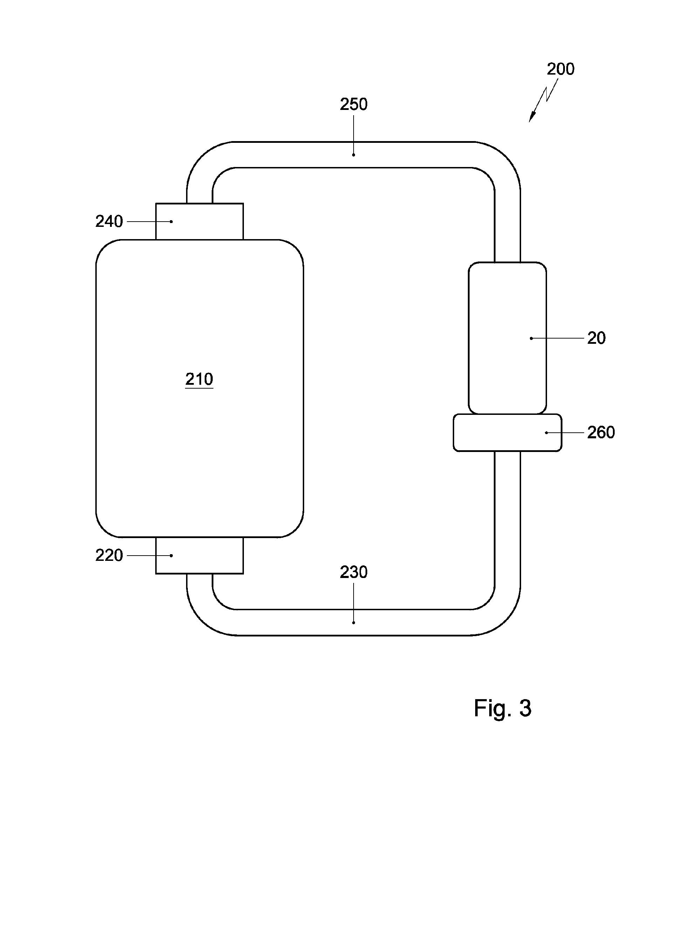

Figure 3 shows a schematic view of a first embodiment of an integrated drying system 200. The system 200 includes an airtight chamber 210, such as a bag, a polybag or a plastic box, that can be filled with material that is to be dried, such as an agricultural product, e.g. leaves, herbs. The chamber 210 is provided with an inflow port 220 connected to an inflow conduit 230, and an outflow port 240 connected to an outflow conduit 250. Further, the outflow conduit 250 is connected to the humid air inflow port 37 or to the first additional valve port 41 of the drying unit 20 described referring to Fig. 2. The dry air outflow port 38 or the second additional valve port 42 of the drying unit 20 is connected to a fan 21 flowing the dried air into the inflow conduit 230, thus closing the loop. By switching the fan 260 on, air is forced to flow through the loop. The air is moistened in the chamber 210 and dried in the drying unit 20, thereby removing moisture from the material present in the airtight chamber 210. When the material in the chamber 210 is dried to a certain level, the fan can be switched off. The integrated drying system 200 fulfils a batchwise drying function, can be implemented as an easy, manually operated and is particularly suited for a low scale approach, e.g. for drying relatively small amounts of seeds.

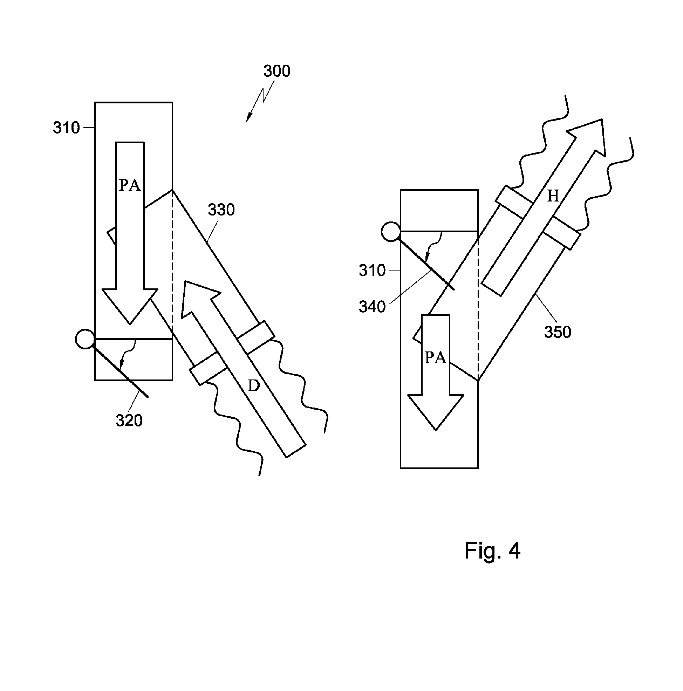

Figure 4 shows a schematic detailed partial view of a second embodiment of an integrated drying system 300 including a pipe 310 containing an amount of particles PA to be dried, e.g. seed. The left-hand side of the figure shows a bottom side provided with a pivotable seed outlet 320 and an air inlet 330 through which dry air D is flown into the pipe 310, and upwardly, through the particles PA to be dried. The dry air is forced to flow upwardly threreby drying the particles PA. The right-hand side of the figure shows a top side of the pipe 310 provided with a pivotable seed inlet 340 and an air outlet 350 conducting humid air H towards a drying unit 20 as described above. Dried air D generated by the drying unit 20 is fed to the air inlet 330 for subsequent drying of particles PA. By operating the seed outlet 320 and the seed inlet 340 a batchwise, semi-batchwise or even continuous drying process can be performed.

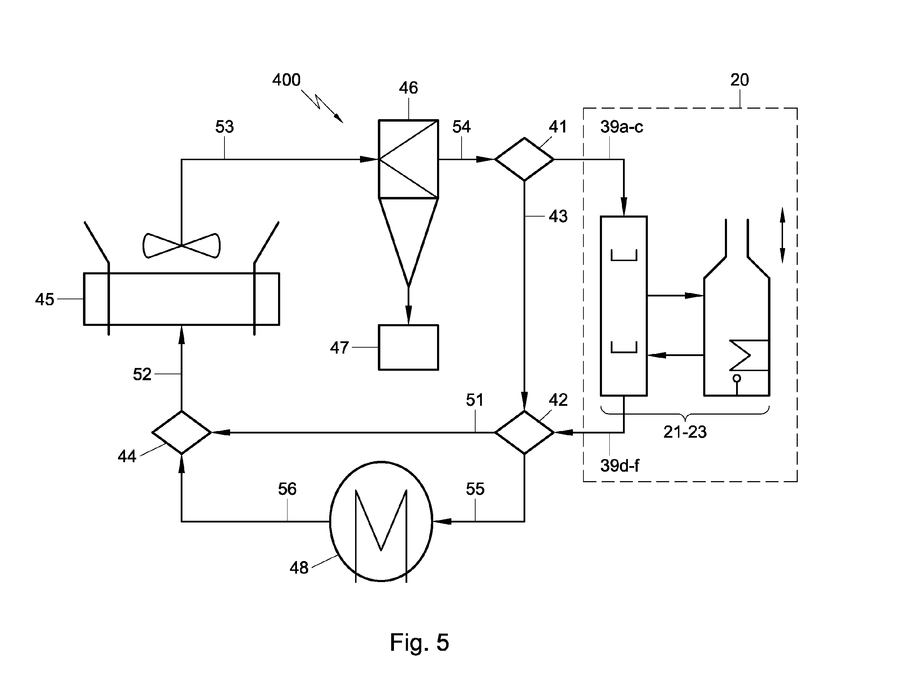

Figure 5 shows a schematic view of a third embodiment of an integrated drying system 400 including the drying unit 20 described referring to Fig. 2. The drying elements 21-23 are subsequently operating in a drying mode, cooling mode or regenerating mode as described above. The integrated drying system 400 includes a first and second additional valve port 41, 42 as described above referring to Fig. 2. From the second additional valve port 42 in a downstream direction, the system 400 further includes a control element 44, a seedbed configuration 45 and a cyclone 46 provided with a dust unit 47. The system 400 also includes a first conduit 51 connecting the second additional valve port 42 to the control element 44, a second conduit 52 connecting the control element 44 to the seedbed configuration 45, a third conduit 53 connecting the seedbed configuration 45 to the cyclone 46, and a fourth conduit 54 connecting the cyclone 46 to the first additional valve port 41. In addition, the system 400 includes a heat exchanger 48, and a fifth and sixth conduit 55, 56 connecting the heat exchanger 48 with the second additional valve port 42 and the control element 44, respectively.

During operation, dried air D is flown from the drying unit 20 to the second additional valve port 42 where a temperature is measured. If the temperature is above a pre-set level, the flow is directly forwarded to the control element 44. Otherwise, the flow is flown to the control element 44 via the heat exchanger 48. At the control element 44, several parameters are measured, e.g. temperature, humidity and air speed. Depending in measurements actuators in the system are set, e.g. a fan for regulating the air speed and/or the amount of air that is flown towards the drying unit 20. From the control element 44, the flow is forwarded to the seedbed configuration 45 including seeds to be dried. From the seedbed configuration 45, the flow is forwarded to the cyclone 46 removing dust. From the cyclone 46, the flow is forwarded to the first additional valve port 41.

The seedbed configuration 45 includes a seedbed, which during use, supports a single layer of seeds. Alternatively, the seedbed may contain multiple layers or a layer of piled seeds.The seedbed may for example contain a seed carrier comprising wire gauze or a perforated plate. Advantageously the circulating gas lifts the seed from the seedbed, such that all sides of the floating seed neither contact another seed nor the seedbed, thereby enabling gas to flow around the seed skin. By applying a fluidized bed system the drying process is nearly even, thereby minimizing energy loss due to overdrying certain seed fractions.

The term "seeds" refers to any live seed, e.g. live seeds that are used for the generation of progeny plants grown from the seeds when seeded, sowed or planted in or on a soil or suitable growth substratum. In fact, any seed can be used in the method of the invention. Particularly useful are seeds of wheat, oat, corn (mais), barley, rye, millet, rice, soy, rapeseed, linseed (flax), sunflower, carrot, black salsify, runner bean, goa bean, asparagus pea or winged bean, haricot bean, climbing bean or pole bean, snap bean, broad bean or field bean, garden pea or green pea, lupin, tomato, pepper, melon, pumpkin, cucumber, egg plant, zucchini, onion, leek, lettuce, endive, spinach, corn salad, gherkin, (red) cabbage, savoy cabbage, pointed cabbage, Chinese cabbage, pak-choi (bok choy), cauliflower, Brussels sprouts, sugar beet, beetroot, kohlrabi, chicory, artichoke, asparagus, broccoli, celeriac, celery, radish, grass and spices. Most preferably the seeds of soy and rice are used in aspects of the present invention.

It is noted that the integrated drying system 400 shown in Fig. 5 is an exemplary embodiment. Many modifications can be performed. As an example, the cyclone can be removed. Further, components can be added, such as a humidifier. The integrated drying system 400 shown in Fig. 5 is particularly suited for drying and storage of high volume bulk products such as corn, rice, wheat etc.

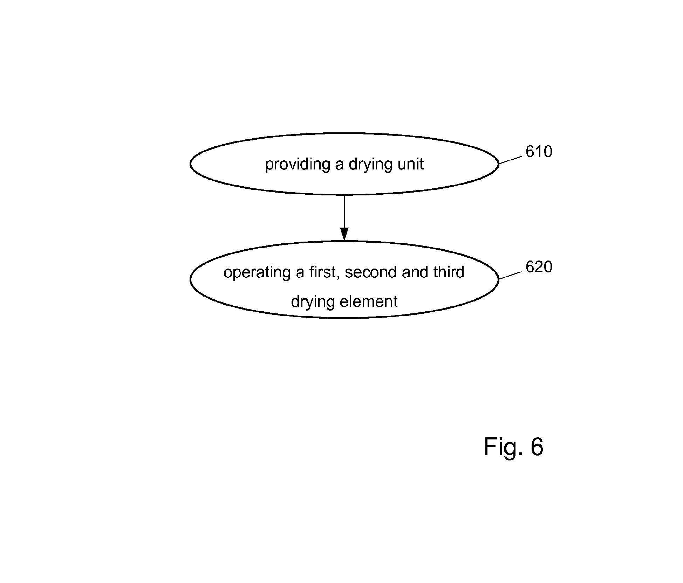

Figure 6 shows a flow chart of steps of a method for drying according to the invention. The method comprises the step of providing a drying unit 610, comprising a multiple number of drying elements, each of the drying elements comprising a humid air inflow opening, a dry air outflow opening and a flow channel including a drying chamber containing during operation zeolite particles and extending between the inflow and outflow opening, each drying element further comprising a cooling medium inflow opening, a cooling medium outflow opening and a cooling channel extending between said cooling medium inflow and outflow opening for cooling the flow channel. Further, the method comprises the step of operating a first, a second and a third drying element each cyclically in a drying mode, a cooling mode and a regenerating mode 620, wherein the modes of the consecutive drying elements are cyclically shifted. Optionally, the method further comprises the step of realizing a fluid communication between the cooling medium outflow opening of a particular drying element and the dry air outflow opening of the cyclically next drying element during the cooling mode of the particular drying element and the regenerating mode of the cyclically next drying element.

The steps of operating a first, a second and a third drying element and realizing a fluid communication between a specific cooling medium outflow opening and a specific dry air outflow opening can be executed using dedicated hardware structures, such as FPGA and/or ASIC components. Otherwise, the method can also at least partially be performed using a computer program product comprising instructions for causing a processor of a computer system or a control unit to perform the above described steps of the method according to the invention. All steps can in principle be performed on a single processor. However it is noted that at least one step can be performed on a separate processor. As an example, the first, second and third drying element can be controlled by a separate processor.

The invention is not restricted to the embodiments described above. It will be understood that many variants are possible.

It is noted that the control unit 40 shown in Fig. 2 can be integrated controlling both the inflow of humid air H and the outflow of dry air D. However, the control unit 40 can also be implemented as a first control element controlling the inflow of humid air and a second control element controlling the outflow of dry air.

It is further noted that, preferably, the heated cooling medium flows from a drying element that is being cooled towards and into the flowing channel of another drying element that is being regenerated. However, the drying unit provided with cyclically operated and mutually cyclically shifted drying elements, as described above, can also be implemented without the feature of using heated cooling medium for regenerating zeolite particles. As an example, the regenerating process can be performed using heated ambient air providing a more simple overall design, though less efficient from an energetic point of view.

It is also noted that the principle of flowing heated cooling medium from a first drying element that is being cooled towards and into the flowing channel of another drying element that is being regenerated can advantageously be applied to a drying unit provided with cyclically operated and mutually cyclically shifted drying elements, as described above. However, more generally, the principle of flowing heated cooling medium from a first drying element that is being cooled towards and into the flowing channel of another drying element that is being regenerated, can also be applied to a drying unit including drying elements according to claim 4 that are operated in a different way, e.g. in a dual drying element configuration.

In addition, it is noted that the drying unit may include a single or a multiple number of fans generated respective flows as described above.

These and other embodiments will be apparent for the person skilled in the art and are considered to fall within the scope of the invention as defined in the following claims.

## Claims

1. A method for drying humid air, comprising the steps of:
- providing a drying unit, comprising a multiple number of drying elements, each of the drying elements comprising a humid air inflow opening, a dry air outflow opening and a flow channel including a drying chamber containing during operation zeolite particles and extending between the inflow and outflow opening, each drying element further comprising a cooling medium inflow opening, a cooling medium outflow opening and a cooling channel extending between said cooling medium inflow and outflow opening for cooling the flow channel, and
- operating a first, a second and a third drying element each cyclically in a drying mode, a cooling mode and a regenerating mode, wherein the modes of the consecutive drying elements are cyclically shifted.

2. A method according to claim 1, further comprising a step of realizing a fluid flow from the cooling medium outflow opening of a drying element operated in a cooling mode, towards the flow channel of another drying element that is operated in a regenerating mode.

3. A method according to claim 2 or 3, further comprising the step of measuring a temperature at the humid air inflow opening of a drying element during regenerating mode.

4. A drying element for drying humid air, comprising a humid air inflow opening, a dry air outflow opening and a flow channel including a drying chamber containing during operation zeolite particles and extending between the inflow and outflow opening, the drying element further comprising a cooling medium inflow opening, a cooling medium outflow opening and a cooling channel extending between said cooling medium inflow and outflow opening for cooling the flow channel, wherein the cooling medium outflow opening is connectable to the dry air outflow opening of a further drying element.

5. A drying element according to claim 4, having an elongate structure with a first end and a second end, wherein the elongate structure is preferably cylindrical or plate shaped.

6. A drying element according to any of the preceding claims 4 or 5, wherein the flow channel further comprises a heating chamber located adjacent to the dry air outflow opening or the humid air inflow opening.

7. A drying element according to any of the preceding claims 4-6, wherein the flow channel further comprises an expansion chamber upstream and/or downstream to the drying chamber.

8. A drying element according to any of the preceding claims 4-7, further comprising a weighing sensor for weighing the weight of the drying element.

9. A drying unit, comprising a multiple number of drying elements according to any of the preceding claims 4-8, wherein a first, second and third drying element are each cyclically operable in a drying mode, a cooling mode and a regenerating mode, and wherein the modes of the consecutive drying elements are cyclically shifted.

10. A drying unit according to claim 9, wherein the cooling medium outflow opening of a first drying element is connected to the dry air outflow opening of the second drying element, the cooling medium outflow opening of the second drying element is connected to the dry air outflow opening of a third drying element, and the cooling medium outflow opening of the third drying element is connected to the dry air outflow opening of the first drying element.

11. A drying unit according to claim 10, wherein a fluid flow is enabled from the cooling medium outflow opening of a particular drying element towards the dry air outflow opening of the cyclically next drying element during the cooling mode of the particular drying element and the regenerating mode of the cyclically next drying element.

12. A drying unit according to any of the preceding claims 9-11, wherein the drying elements are arranged in parallel and/or stacked on each other.

13. A drying unit according to any of the preceding claims 9-12, further comprising a humid air inflow port, a dry air outflow port and an intermediate conduit structure with valves dynamically interconnecting the humid air inflow port to the humid air inflow opening of the first, second and third drying element, and dynamically interconnecting the dry air outflow opening of the first, second and third drying element to the dry air outflow port, such that the inflow and outflow ports are connected to the inflow and outflow opening of the drying element that is operated in a drying mode.

14. A drying unit according to claim 12 or 13, further comprising a control unit controlling valves in the intermediate conduit structure and/or in a cooling medium conduit structure generating a flow in the cooling channel of the cooling elements.

15. A computer program product for operating a drying unit, comprising a multiple number of drying elements, each of the drying elements comprising a humid air inflow opening, a dry air outflow opening and a flow channel including a drying chamber containing during operation zeolite particles and extending between the inflow and outflow opening, each drying element further comprising a cooling medium inflow opening, a cooling medium outflow opening and a cooling channel extending between said cooling medium inflow and outflow opening for cooling the flow channel, the computer program product comprising computer readable code for causing a processor to perform the step of:
- operating a first, a second and a third drying element each cyclically in a drying mode, a cooling mode and a regenerating mode, wherein the modes of the consecutive drying elements are cyclically shifted.
